## Europäisches Patentamt
## European Patent Office
## Office européen des brevets

(11) Publication number: **0 131 422**
**B1**

# EUROPEAN PATENT SPECIFICATION

(45) Date of publication of patent specification: **18.05.88**

(51) Int. Cl.⁴: **H 01 G 4/34**

(21) Application number: **84304541.0**

(22) Date of filing: **03.07.84**

(54) **Adjustable monolithic ceramic capacitor.**

(30) Priority: **06.07.83 US 511416**

(43) Date of publication of application:
**16.01.85 Bulletin 85/03**

(45) Publication of the grant of the patent:
**18.05.88 Bulletin 88/20**

(84) Designated Contracting States:
**BE DE FR GB**

(56) References cited:
**DE-A-2 246 573**
**US-A-3 688 361**
**US-A-3 898 541**
**US-A-4 074 340**

**22ND ELECTRONIC COMPONENTS
CONFERENCE, 15th-17th May 1972, pages
294-297, Washington D.C., USA; R.D.
McBRAYER et al.: "High energy capacitors
using glass-ceramic dielectrics"**

(73) Proprietor: **SPRAGUE ELECTRIC COMPANY
North Adams Massachusetts 01247 (US)**

(72) Inventor: **Coleman, James Hugh
2633 Bretton Road
Wichita Falls Texas 76308 (US)**

(74) Representative: **Crawford, Andrew Birkby et al
A.A. THORNTON & CO. Northumberland House
303-306 High Holborn
London WC1V 7LE (GB)**

Courier Press, Leamington Spa, England.

## 0 131 422

**Description**

This invention relates to an adjustable monolithic ceramic capacitors having a pair of main electrodes extending to opposite ends of a very small capacitor body, and more particularly to such capacitors having auxiliary electrodes between the main electrodes.

Monolithic ceramic capacitors typically consist of a dielectric ceramic body having two groups of main electrodes buried therein. One group extends to a side of the body and the other group to another side for termination and electrical access. The electrical capacity so obtained in the capacitor is a function of many variables of which the major are dielectric thickness between adjacent electrodes, dielectric constant (K) of the ceramic, and registration between adjacent electrodes. It is not unusual for capacity values of a production lot of monolithic capacitors to vary by 40%.

Misregistration between adjacent electrodes can be eliminated as a source of variation in capacitance by designing the electrode patterns so that there is a constant predetermined area of overlap between adjacent electrodes, as is described in US patent 3,896,354 issued July 22, 1975.

Also, when tighter capacitance tolerances are desired than obtainable in a given process, it is known in the prior art to abrade a cavity into the body, thereby removing central portions of some of the electrodes and surrounding ceramic to thereby reduce the capacity to the desired value. Such a technique is described by Hatch in US 3,456,170 issued July 15, 1969. However, the abrading technique is not practical for use with very small capacitors wherein the electrode overlap area is small compared to that of the capacitor body profile.

Another prior art technique for adjusting capacity includes providing several auxiliary electrodes that extend to yet another surface of the ceramic body. These auxiliary electrodes are buried between two main electrodes that extend to the same main terminal of the capacitor and, when connected externally to the other main terminal of the capacitor, the capacitance increases.

Such prior art technique is disclosed in U.S. Patents 3898541 and 3688361. U.S. Patent 3898541 discloses a monolithic ceramic capacitor comprising a ceramic body, at least two main sheet electrodes buried in said body and spaced apart by a central layer of said ceramic body, one of said main electrodes extending to one end of said body and the other of said main electrodes extending to the opposite end of the body, the two main electrodes having a region of overlap that is spaced from the said body ends and the two side edges of the body. One of the main electrodes comprises a plurality of sheets disposed one on top of the other and spaced apart in the direction of the height of the capacitor body. Between at one pair of such sheets is disposed at least one adjusting electrode comprising a conductive island having a tab which extends to the side of the body and is connectable to one of the sheets of the main electrode. In this manner by selectively connecting the conductive island to the sheets, the capacitance of the capacitor can be incrementally adjusted.

U.S. Patent 3688361 discloses a similar arrangement wherein one of the main electrodes comprises a plurality of sheets spaced apart in the direction of the height of the capacitor body and fine trimming plates are disposed between the sheets. By selectively connecting such plates to the main electrode, the capacitance of the capacitor may be incrementally increased.

It is an object of the present invention to provide an improved adjustable monolithic ceramic capacitor.

The present invention is characterized in that at least two spaced apart auxiliary sheet electrodes are buried in the central ceramic layer, whereby the capacitance as measured at the opposite body ends between the main electrodes increases when any one of the auxiliary electrodes is electrically connected to either one of the main electrodes.

Thus in accordance with the invention the auxiliary electrodes may be connected to either of the main electrodes and this permits an adjustment of the capacitance value since by permuhing the various possibilities of connection and disconnection a large number of different incremental adjustments may be obtained.

In a drawing which illustrates embodiments of the invention:

Figure 1 shows a perspective view of an adjustable monolithic ceramic capacitor;

Figure 2 shows a top sectional view of the capacitor of Figure 1 taken in plane X—Y as seen in direction 2;

Figure 3 shows a side sectional view of the capacitor of Figure 1 taken in plane X—Z looking in direction 3; and

Figure 4 is an exploded view of three of the ceramic layers with deposited electrodes which form the capacitor of Figure 1.

In general, the monolithic ceramic capacitor of this invention has two main sheet electrodes buried in a dielectric ceramic body. The two main electrodes are spaced apart by a central layer of the body. The two main electrodes extend, respectively, to two opposite ends of the body and overlap each other in a region that is spaced from the two opposite ends, as well as from the two side edges of the body. Thus the area of overlap can be substantially less than the maximum possible area and preferably less than 33%. At least two spaced apart auxiliary sheet electrodes are buried in the central ceramic layer between the main electrodes and extend to one or one another of the aforementioned side edges.

Thus the capacitance, measured between the main electrodes at the opposite body ends, increases when any one of the auxiliary electrodes is connected to either one of the main electrodes.

2

This invention is especially concerned with small monolithic ceramic capacitors wherein the active overlap region is no more than one third the maximum possible area represented by the total area of a main-electrode within the ceramic body.

The ceramic capacitor illustrated in the Figures has a dielectric ceramic body 10 having buried therein two main electrodes 12 and 14. Electrode 12 lies in plane X—Y and has the shape of a T. Electrodes 12 and 14 overlap in a central region of body 10 where essentially all of the electrical capacity between them is developed. A pair of auxiliary electrodes 16 and 18 is buried in the dielectric ceramic in the above-noted overlap region between the two main electrodes 12 and 14.

Body 10 is 0.080 inch (2.03 mm) long (in the X-direction) and 0.050 inch (1.27 mm) wide (in the Y-direction). The active-capacity overlap area of main electrodes 12 and 14 is thus a small part of the total area of the X—Y plane that lies within body 10, namely about 18%, so that adequate spaces are provided between electrodes (e.g. between 16 and 18, and between 18 and 14) to avoid inadvertent shorting when applying external terminations 20 and 22.

Using a ceramic material having a K of about 70, and a dielectric spacing between the main electrodes 12 and 14 of 3 mils (0.076 mm), the capacity between main electrodes 12 and 14 is about 3.4 pf, with the auxiliary electrodes 16 and 18 disconnected and "floating" electrically (absent such connections as 20b and 22b).

The auxiliary electrodes 16 and 18 are spaced from main electrode 12 by about 1 mil (0.025 mm) and are spaced from main electrode 14 by about 2 mils (0.051 mm). If either auxiliary electrode 16 or 18 is connected to main electrode 14, the capacity as seen between terminations 20 and 22 increases from 3.4 pf to 4.0 pf. On the other hand if either auxiliary electrode 16 or 18 is connected to main electrode 12, the capacity between terminations 20 and 22 increases from 3.4 pf to 5.7 pf. The possible capacity values obtainable by permuting the auxiliary electrode connections are shown in the Table below:

| Permutation | Auxiliary electrode connections | Capacity (pf) |
|---|---|---|
| 1 | none | 3.4 |
| 2 | 18—14 | 4.0 |
| 3 | 18—16—14 | 4.5 |
| 4 | 16—12 | 5.7 |
| 5 | 16—12 and 18—14 | 6.2 |
| 6 | 18—16—12 | 7.9 |

Capacitors of this invention may be made by any of the methods well-known to the monolithic ceramic capacitor art. Briefly, a slurry of ceramic powder is formed in a liquid medium consisting of xylene as a vehicle, methylmethacrylate as a binder, and a surfactant such as lecithin. Successive coatings of the ceramic slurry are deposited on a substrate, each coating being dried before depositing the next. On some of the dried coatings a pattern of a palladium-containing electroding ink is screen printed. This stack is then fired to maturity at from 1000 to 1400°C in air. The side edges and the ends to which electrodes extend may be abraded to expose the electrodes more fully, and a silver containing paint is applied to those ends and edges. The body is then fired at about 760°C to cure the silver paint and form conducting terminations 20a, 20b, 22a and 22b that each contacts certain of the buried electrodes 12, 16, 14 and 18, respectively.

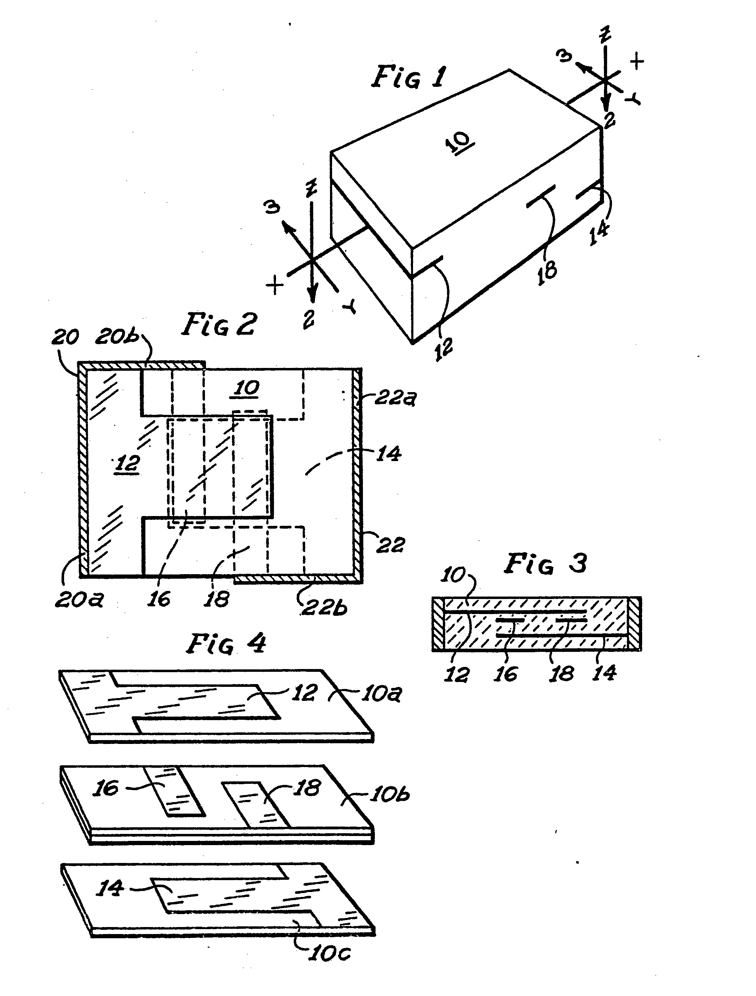

In the application of terminations to the body 10, one or both, or neither of termination portions 20b and 22b may be used. Such selection may be made for a production batch of capacitor bodies having a tight spread of capacities. Alternatively, terminations may be fully applied as shown in Figure 2 and thereafter portions of one or both terminations 20 and 22 may be severed to cause one or both auxiliary electrodes 18 and 16 to float electrically, thus eliminating their influence on the capacitance value. For example, to disconnect auxiliary electrode 18, a center region of termination portion 22b may be severed.

As a third alternative, and in most cases the most attractive, only termination portions 20a and 22a are applied to all the bodies. These end terminated bodies can then be tested and classified by capacity into a number of groups. For each group, termination portions 20b and 22b are applied as needed to make all capacities close in value to a desired nominal capacity.

## Claims

1. A monolithic ceramic capacitor comprising a ceramic body (10), at least two main sheet electrodes (12, 14) buried in said body and spaced apart by a central layer of said ceramic body, one of said main electrodes extending to one end of said body and the other of said main electrodes extending to the

3

**0 131 422**

opposite end of said body, said two main electrodes having a region of overlap that is spaced from the body ends and the two side edges of the body, at least two spaced apart auxiliary sheet electrodes (16, 18) extending to at least one of said side edges, characterized in that the auxiliary sheet electrodes are buried in said central ceramic layer whereby the capacitance as measured at said opposite body ends between said two main electrodes increases when any one of said auxiliary electrodes is electrically connected to either one of said main electrodes.

2. The capacitor of claim 1 wherein said two auxiliary electrodes lie in the same plane and extend, respectively, to the opposite of said side body edges.

3. The capacitor of claim 1 wherein the space between said auxiliary electrodes and one of said main electrodes is less than the space between said auxiliary electrodes and the other of said main electrodes.

4. The capacitor of claim 1 wherein said overlap region of said two main electrodes occupies less than one third maximum possible area represented by the total area of a main electrode plane within said body.

5. The capacitor of claim 1 wherein the portions of said main electrodes at said overlap region are spaced from said side body edges but the extending portions of said main electrodes at said opposite body ends extend also to said side body edges so that each of said main electrodes has the shape of a T and a planar metal termination film may connect any one of said auxiliary electrodes to one of said main electrodes.

**Patentansprüche**

1. Monolithischer Keramikkondensator mit einem Keramikkörper (10), wenigstens zwei folienförmigen Hauptelektroden (12, 14), die in dem Körper angeordnet sind und voneinander durch eine mittlere Schicht des Keramikkörpers getrennt sind, wobei eine der Hauptelektroden sich zu einem Ende des Körpers und die andere der Hauptelektroden sich zum anderen Ende des Körpers erstreckt, wobei die zwei Hauptelektroden einen überlappungsbereich aufweisen, der im Abstand zu den Enden des Körpers und den zwei Seitenrändern des Körpers liegt, sowie mit zwei im Abstand angeordneten folienförmigen Hilfselektroden (16, 18), die sich zu wenigstens einem der Seitenränder erstrecken, dadurch gekennzeichnet, daß die folienförmigen Hilfselektroden in der mittleren Keramikschicht angeordnet sind, wodurch die Kapazität, gemessen an den entgegengesetzten Enden des Körpers zwischen den zwei Hauptelektroden, größer wird, wenn eine der Hilfselektroden elektrisch mit einer der Hauptelektroden verbunden wird.

2. Kondensator nach Anspruch 1, bei dem die zwei Hilfselektroden in der gleichen Ebene liegen und sich jeweils zu entgegengesetzten Seitenrändern des Körpers erstrecken.

3. Kondensator nach Anspruch 1, bei dem der Zwischenraum zwischen den Hilfselektroden und einer der Hauptelektroden kleiner als der Zwischenraum zwischen den Hilfselektroden und der anderen der Hauptelektroden ist.

4. Kondensator nach Anspruch 1, bei dem der überlappungsbereich der zwei Hauptelektroden weniger als 1/3 der maximal möglichen Fläche einnimmt, die von der Gesamtfläche der Hauptelektrodenebene innerhalb des Körpers dargestellt wird.

5. Kondensator nach Anspruch 1, bei dem die Abschnitte der Hauptelektroden in dem überlappungsbereich von den Seitenrändern des Körpers Abstand haben, wobei jedoch die sich an den gegenüberliegenden Körperenden erstreckenden Abschnitte der Hauptelektroden sich ebenfalls zu den Seitenrändern des Körpers derart erstrecken, daß jede der Hauptelektroden die Gestalt eines T aufweist und ein ebener Metallabschlußfilm eine der Hilfselektroden mit einer der Hauptelektroden verbinden kann.

**Revendications**

1. Condensateur monolithique en céramique comportant un corps en céramique (10), au moins deux électrodes principales en feuille (12, 14) enfouies dasn ledit corps et séparées l'une de l'autre par une couche centrale dudit corps en céramique, l'une desdites électrodes principales s'étendant jusqu'à une extrémité dudit corps et l'autre desdites électrodes principales s'étendant jusqu'à l'extrémité opposée dudit corps, les deux dites électrodes principales ayant une région de recouvrement qui est écartée des extrémités du corps et des deux bords latéraux de celui-ci, au moins deux électrodes auxiliaires en feuille (16, 18) espacées et séparées s'étendant jusqu'à au moins l'un desdits bords latéraux, caractérisé en ce que les électrodes auxiliaires en feuille sont enfouies dans ladite couche central en céramique, ce qui a pour effet que la capacité mesurée auxdites extrémités opposées du corps, entre les deux dites électrodes principales, augmente lorsque l'une quelconque desdites électrodes auxiliaires est électriquement reliée à l'une ou l'autre desdites électrodes principales.

2. Condensateur selon revendication 1, dans lequel lesdites deux électrodes auxiliaires sont situées dans le même plan et s'étendent respectivement jusqu'aux dits bords latéraux opposés du corps.

3. Condensateur selon revendication 1, dans lequel l'espace entre lesdites électrodes auxiliaires et l'une desdites électrodes principales est inférieur à l'espace entre lesdites électrodes auxiliaires et l'autre desdites électrodes principales.

4. Condensateur selon revendication 1, dans lequel ladite région de recouvrement desdites deux électrodes principales occupe moins d'un tiers de la surface maximale possible représentée par la surface totale d'un plan d'électrode principale au sein dudit corps.

4

5. Condensateur selon revendication 1, dans lequel les parties desdites électrodes principales dans ladite région de recouvrement sont séparées desdits bords latéraux du corps par un intervalle, tandis que les parties desdites électrodes principales s'étendant jusqu'auxdites extrémités opposées du corps s'étendent aussi jusqu'auxdits bords latéraux du corps, de sorte que chacune desdites électrodes principales possède la forme d'un T et qu'un film de terminaison métallique plan peut relier l'une quelconque desdites électrodes auxiliaires à l'une desdites électrodes principales.

0 131 422

Fig 1

Fig 2

Fig 3

Fig 4